(19) Europäisches Patentamt
European Patent Office
Office européen des brevets

(11) Veröffentlichungsnummer : **0 041 141**
**B1**

# (12) EUROPÄISCHE PATENTSCHRIFT

(45) Veröffentlichungstag der Patentschrift : **24.08.83**

(51) Int. Cl.³ : **C 08 F 10/00**, C 08 F 4/64

(21) Anmeldenummer : **81103469.3**

(22) Anmeldetag : **07.05.81**

## (54) Verfahren zum Herstellen von Homo- und Copolymerisaten von alpha-Monoolefinen mittels eines Ziegler-Natta-Katalysatorsystems.

(30) Priorität : **02.06.80 DE 3020827**

(43) Veröffentlichungstag der Anmeldung : **09.12.81 Patentblatt 81/49**

(45) Bekanntmachung des Hinweises auf die Patenterteilung : **24.08.83 Patentblatt 83/34**

(84) Benannte Vertragsstaaten : **AT BE DE FR GB IT NL**

(56) Entgegenhaltungen :
**EP A 0 009 724**
**DE A 2 129 659**
**DE A 2 400 190**
**DE A 2 841 645**

(73) Patentinhaber : **BASF Aktiengesellschaft**
**Carl-Bosch-Strasse 38**
**D-6700 Ludwigshafen (DE)**

(72) Erfinder : **Jaggard, James F.R., Dr.**
**Bruesseler Ring 45**
**D-6700 Ludwigshafen (DE)**
Erfinder : **Klaerner, Peter, Dr.**
**Hauptstrasse 62**
**D-6719 Battenberg (DE)**
Erfinder : **Schweier, Guenther, Dr.**
**Friedrich-Pietzsch-Strasse 14**
**D-6701 Friedelsheim (DE)**

**EP 0 041 141 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zum Herstellen von Homo- und Copolymerisaten von α-Monoolefinen mittels eines Ziegler-Natta-Katalysatorsystems

Die vorliegende Erfindung basiert auf einem Verfahren zum Herstellen von Homo- und Copolymerisaten von $C_2$-bis $C_6$-α-Monoolefinen bei Temperaturen von 20 bis 160, insbesondere 50 bis 120 °C und Drücken von 1 bis 100, insbesondere 20 bis 70 bar mittels eines Ziegler-Natta-Katalysatorsystems aus

(1) einer Titan-III-Komponente bei deren Herstellung man

(1.1) eine Titan enthaltende Verbindung (a) der Formel

$$TiCl_3 \cdot nAlCl_3,$$

worin n für eine Zahl im Bereich von 0,01 bis 1, insbesondere von 0,1 bis 0,4 steht, und

(1.2) eine Phosphor enthaltende Verbindung (b) der Formel

$$O_mPR_3^1,$$

worin stehen

m für 0 oder 1,

$R^1$ für $R^2$, $OR^2$ oder $NR_2^2$ und

$R^2$ für einen nicht mehr als 24, insbesondere nicht mehr als 8 Kohlenstoffatome aufweisenen Alkyl-, Aryl-, Alkaryl- oder Aralkylrest

einer Mahlbehandlung unterzieht, derart, daß man

(A) mit einer Kugelschwingmühle arbeitet, die eine Mahlbeschleunigung von 30 bis 80, insbesondere von 45 bis 55 $m \cdot sec^{-2}$ hat,

(B) die Mühle zunächst mit der Titan enthaltenden Verbindung (a) beschickt und — gegebenenfalls — bei einer Temperatur von − 50 bis + 100, insbesondere − 30 bis + 50 °C über eine Zeitspanne von 0,5 bis 100, insbesondere 2 bis 20 Stunden in Abwesenheit von Verdünnungsmitteln betreibt, dann

(C) unter Mahlen bei einer Temperatur des Mahlgutes von − 50 bis + 80, insbesondere von − 30 bis + 60 °C die einem Molverhältnis Titan in der Titan enthaltenden Verbindung (a) : Phosphor enthaltende Verbindungen (b) von 1 : 0,01 bis 1 : 1, insbesondere von 1 : 0,1 bis 1 : 0,35 entsprechende Menge der Phosphor enthaltenden Verbindung (b) mit einer Geschwindigkeit von 0,01 bis 200, insbesondere von 1 bis 80 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 100, insbesondere von 5 bis 30 Stunden auf einer Temperatur von + 15 bis + 120, insbesondere von + 30 bis + 90 °C hält, hierauf

(E) — gegebenenfalls — das gemäß (D) erhaltene Produkt über eine Zeitspanne von 0,5 bis 60, insbesondere von 2 bis 30 Minuten bei einer Temperatur von − 50 bis + 5, insbesondere von − 40 bis 0 °C in Abwesenheit von Verdünnungsmitteln weitervermahlt, sodann

(F) — gegebenenfalls und vorteilhafterweise — das gemäß (D) oder (E) erhaltene Produkt ohne es zu mahlen über eine Zeitspanne von 0,25 bis 300, insbesondere 2 bis 150 Std. auf einer Temperatur von + 20 bis + 150, insbesondere + 45 bis + 100 °C hält, und danach

(G) — gegebenenfalls — das gemäß (F) erhaltene Produkt über eine Zeitspanne von 0,5 bis 60, insbesondere 2 bis 30 Minuten bei einer Temperatur von − 50 bis + 5, insbesondere von − 40 bis 0 °C in Abwesenheit von Verdünnungsmitteln nachvermahlt,

(2) einer Aluminiumalkyl-Komponente der Formel

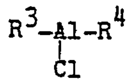

worin $R^3$ und $R^4$ gleich oder verschieden sind und stehen für eine 1 bis 8, insbesondere 2 bis 4 Kohlenstoffatomen aufweisende Alkylgruppe, sowie

(3) — gegebenenfalls — einem phenolischen Stoff der Formel

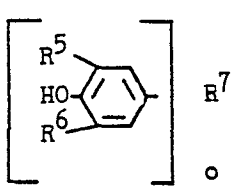 oder (I)

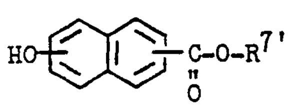 (II)

worin stehen

$R^5$ für eine $C_1$- bis $C^6$-, insbesondere $C_3$- bis $C_4$-Alkylgruppe,

$R^6$ für Wasserstoff oder eine $C_1$- bis $C_6$-, insbesondere $C_3$- bis $C_4$-Alkylgruppe,

$R^7$ für Wasserstoff oder einen nicht mehr als 30, insbesondere nicht mehr als 24 Kohlenstoffatome sowie — gegebenenfalls — bis zu insgesamt 6, insbesondere bis zu insgesamt 4 Äthergruppen und/oder Estergruppen aufweisenden gesättigten Kohlenwasserstoffrest,

$R^{7'}$ für eine $C_2$- bis $C_{24}$-, insbesondere $C_4$- bis $C_{18}$-Alkylgruppe, und

o für eine ganze Zahl von 1 bis 6, insbesondere 1 bis 4,

mit den Maßgaben, daß das Atomverhältnis Titan aus der Titan-III-Komponente (1) : Aluminium aus der Aluminium-alkyl-Komponente (2) im Bereich von 1 : 1 bis 1 : 20, insbesondere 1 : 2 bis 1 : 15 liegt und, daß — im gegebenen Fall — das Molverhältnis Aluminiumalkyl-Komponente (2) : phenolischer Stoff (3) 1 : 1 bis 40 : 1, insbesondere 3 : 1 bis 25 : 1 beträgt.

Verfahren dieser Art sind bekannt ; ihre Besonderheit gegenüber vergleichbaren anderen Verfahren liegt in der speziellen Ausgestaltung des Katalysatorsystems, wobei als Prototypen für den vorliegenden Fall die aus den DE-A 24 00 190 (≙ US-A 3,977,997) und 28 41 645 bekannten Verfahren genannt werden können.

Die speziellen Ausgestaltungen des Katalysatorsystems werden vorgenommen, um bestimmte Ziele zu erreichen, z. B. die folgenden :

(a) Katalysatorsysteme, die bei der Polymerisation von α-Monoolefinen, wie insbesondere Propylen, zu Polymerisaten mit einem hohen Anteil an stereoregulärem (= isotaktischem) Polymerisat führen.

(b) Katalysatorsysteme, die eine erhöhte Ausbeute an Polymerisat zu liefern vermögen, nämlich Systeme mit einer erhöhten Produktivität, d. h. Systeme, bei denen die Menge an gebildetem Polymerisat pro Gewichtseinheit des Katalysatorsystems erhöht ist.

(c) Katalysatorsysteme, durch die weniger Halogen in das Polymerisat eingebracht werden ; — was zu erreichen ist, indem die Ausbeute gemäß (b) gesteigert wird und/oder ein Titanhalogenid eingesetzt wird, das möglichst wenig Halogen enthält.

(d) Katalysatorsysteme, deren Aktivitätsmaximum über eine möglichst lange Zeit konstant bzw. relativ konstant bleibt ; — was für die Katalysatorausbeuten von erheblicher Bedeutung ist.

(e) Katalysatorsysteme, die es erlauben, durch Erhöhung der Polymerisationstemperatur eine Umsatzsteigerung zu bewirken ohne signifikante Minderung der Stereoregularität der Polymerisate ; — ein Effekt, der generell erwünscht ist, insbesondere auch bei der Trockenphasenpolymerisation.

(f) Katalysatorsysteme, durch welche — insbesondere bei relativ hohen Polymerisationstemperaturen — die morphologischen Eigenschaften der Polymerisate in bestimmter Weise beeinflußt werden, etwa im Sinne einer einheitlichen Korngröße und/oder einer Verringerung der Feinstkornanteile und/oder eines hohen Schüttgewichtes ; — was z. B. für die technische Beherrschung der Polymerisationssysteme, die Aufarbeitung der Polymerisate und/oder die Verarbeitbarkeit der Polymerisate von Bedeutung sein kann.

(g) Katalysatorsysteme, die einfach und sicher herzustellen und gut handzuhaben sind ; — z. B. solche, die sich in (inerten) Kohlenwasserstoff-Hilfsmedien zubereiten lassen.

(h) Katalysatorsysteme, die es ermöglichen, bei der Polymerisation unter Einwirkung eines Molekulargewichtsreglers, wie insbesondere Wasserstoff, mit relativ geringen Mengen an Regler auszukommen ; — was z. B. für die Thermodynamik der Verfahrensführung von Bedeutung sein kann.

(i) Katalysatorsysteme, die auf spezielle Polymerisationsverfahren zugeschnitten sind ; — etwa solche, die z. B. entweder auf die spezifischen Besonderheiten der Suspensionspolymerisation oder auf die spezifischen Besonderheiten der Trockenphasenpolymerisation abgestimmt sind.

(j) Katalysatorsysteme, die zu Polymerisaten führen, deren Eigenschaftsspektrum sie für das eine oder das andere Anwendungsgebiet besonders geeignet macht.

Nach den bisherigen Erfahrungen gibt es unter den mannigfachen Zielen etliche Ziele, die man durch spezielle Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen liegt die Aufgabenstellung der vorliegenden Erfindung : Eine neue Ausgestaltung eines Katalysatorsystems aufzuzeigen, mit der man gegenüber bekannten Ausgestaltungen bei relativ höheren Temperaturen — mit entsprechend relativ hohen Ausbeuten an Polymerisat — Polymerisate mit einer relativ höheren Stereoregularität (= Isotaktizität) und zusätzlich, insbesondere auch günstigen morphologischen Eigenschaften — wie geringen Feinstkornanteil — erhalten kann.

Es wurde gefunden, daß die gestellte Aufgabe gelöst werden kann mit einem Katalysatorsystem der eingangs definierten Art, dessen Titan-III-Komponente (1) nach der Mahlbehandlung einer zusätzlichen speziellen chemischen Behandlung unterworfen wird.

Gegenstand der vorliegenden Erfindung ist mithin ein Verfahren zum Herstellen von Homo- und Copolymerisaten von $C_2$- bis $C_6$-α-Monoolefinen bei Temperaturen von 20 bis 160, insbesondere 50 bis 120 °C und Drücken von 1 bis 100, insbesondere 20 bis 70 bar mittels eines Ziegler-Natta-Katalysatorsystems aus

(1) einer Titan-III-Komponente, bei deren Herstellung man

(1.1) eine Titan enthaltende Verbindung (a) der Formel

$$TiCl_3 \cdot nAlCl_3,$$

worin n für eine Zahl im Bereich von 0,01 bis 1, insbesondere von 0,1 bis 0,4 steht, und

(1.2) eine Phosphor enthaltende Verbindung (b) der Formel

$$O_mPR_3{}^1,$$

worin stehen

m für 0 oder 1,

$R^1$ für $R^2$, $OR^2$ oder $NR_2{}^2$ und

$R^2$ für einen nicht mehr als 24, insbesondere nicht mehr als 8 Kohlenstoffatome aufweisenden Alkyl-, Aryl-, Alkaryl- oder Aralkylrest,

einer Mahlbehandlung unterzieht, derart, daß man

(A) mit einer Kugelschwingmühle arbeitet, die eine Mahlbeschleunigung von 30 bis 80, insbesondere von 45 bis 55 m · $sec^{-2}$ hat,

(B) die Mühle zunächst mit der Titan enthaltenden Verbindung (a) beschickt und — gegebenenfalls — bei einer Temperatur von – 50 bis + 100, insbesondere – 30 bis + 50 °C über eine Zeitspanne von 0,5 bis 100, insbesondere 2 bis 20 Stunden in Abwesenheit von Verdünnungsmitteln betreibt, dann

(C) unter Mahlen bei einer Temperatur des Mahlgutes von – 50 bis + 80, insbesondere von – 30 bis + 60 °C die einem Molverhältnis Titan in der Titan enthaltenden Verbindung (a) : Phosphor enthaltende Verbindung (b) von 1 : 0,01 bis 1 : 1, insbesondere von 1 : 0,1 bis 1 : 0,35 entsprechende Menge der Phosphor enthaltenden Verbindung (b) mit einer Geschwindigkeit von 0,01 bis 200, insbesondere von 1 bis 80 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 100, insbesondere von 5 bis 30 Stunden auf einer Temperatur von + 15 bis + 120, insbesondere von + 30 bis + 90 °C hält, hierauf

(E) — gegebenenfalls — das gemäß (D) erhaltene Produkt über eine Zeitspanne von 0,5 bis 60, insbesondere von 2 bis 30 Minuten bei einer Temperatur von – 50 bis + 5, insbesondere von – 40 bis 0 °C in Abwesenheit von Verdünnungsmitteln weitervermahlt, sodann

(F) — gegebenenfalls und vorteilhafterweise — das gemäß (D) oder (E) erhaltene Produkt ohne es zu mahlen über eine Zeitspanne von 0,25 bis 300, insbesondere 2 bis 150 Std. auf einer Temperatur von + 20 bis + 150, insbesondere + 45 bis + 100 °C hält, und danach

(G) — gegebenenfalls — das gemäß (F) erhaltene Produkt über eine Zeitspanne von 0,5 bis 60, insbesondere 2 bis 30 Minuten bei einer Temperatur von – 50 bis + 5, insbesondere von – 40 bis 0 °C in Abwesenheit von Verdünnungsmitteln nachvermahlt,

(2) einer Aluminiumalkyl-Komponente der Formel

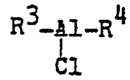

worin $R^3$ und $R^4$ gleich oder verschieden sind und stehen für eine 1 bis 8, insbesondere 2 bis 4 Kohlenstoffatome aufweisende Alkylgruppe, sowie

(3) — gegebenenfalls — einem phenolischen Stoff der Formel

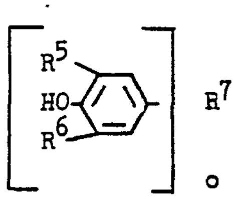 oder (I)

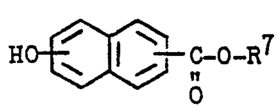 (II)

worin stehen

$R^5$ für eine $C_1$- bis $C_6$-, insbesondere $C_3$- bis $C_4$-Alkylgruppe,

$R^6$ für Wasserstoff oder eine $C_1$- bis $C_6$-, insbesondere $C_3$- bis $C_4$-Alkylgruppe,

$R^7$ für Wasserstoff oder einen nicht mehr als 30, insbesondere nicht mehr als 24 Kohlenstoffatome sowie — gegebenenfalls — bis zu insgesamt 6, insbesondere bis zu insgesamt 4 Äthergruppen und/oder Estergruppen aufweisenden gesättigten Kohlenwasserstoffrest,

$R^{7'}$ für eine $C_2$- bis $C_{24}$-, insbesondere $C_4$- bis $C_{18}$-Alkylgruppe, und

o für eine ganze Zahl von 1 bis 6, insbesondere 1 bis 4,

mit den Maßgaben, daß das Atomverhältnis Titan aus der Titan-III-Komponente (1) : Aluminium aus der Aluminiumalkyl-Komponente (2) im Bereich von 1 : 1 bis 1 : 20, insbesondere 1 : 2 bis 1 : 15 liegt, und daß das Molverhältnis Aluminiumalkyl-Komponente (2) : phenolischer Stoff (3) 1 : 1 bis 40 : 1, insbesondere 3 : 1 bis 25 : 1 beträgt.

Das erfindungsgemäße Verfahren ist dadurch gekennzeichnet, daß eine Titan-III-Komponente (1) eingesetzt wird, die wie folgt erhalten wurde

(H) es wird eine Suspension hergestellt aus

($H_1$) 1 Gew.-Teil des gemäß (D), (E), (F), oder (G) erhaltenen Produkts,

($H_2$) 0,5 bis 20, insbesondere 0,7 bis 2 Gew.-Teilen eines unter Normalbedingungen flüssigen und unterhalb von 150, insbesondere unterhalb von 100 °C siedenden Kohlenwasserstoffs (c), sowie

($H_3$) einer Sauerstoff enthaltenden Verbindung (d), bestehend aus

($d_1$) einem Äther, der insgesamt 4 bis 30, insbesondere 6 bis 16 Kohlenstoffatome enthält und die Formel

$$R^8—O—R^{8'}$$

hat, worin $R^8$ und $R^{8'}$ gleich oder verschieden sind und stehen für (I) eine 1 bis 15, insbesondere 3 bis 8 Kohlenstoffatome aufweisende Alkylgruppe, (II) eine Phenylgruppe oder (III) eine insgesamt 7 bis 14, insbesondere 7 bis 10 Kohlenstoffatome aufweisende Alkylphenylgruppe, und/oder

($d_2$) — vorzugsweise — einem Ester, der insgesamt 2 bis 34, insbesondere 2 bis 14 Kohlenstoffatome enthält und die Formel

$$R^{9'}-O-CO-R^9$$

$$\begin{array}{l} R^{9'}-O-CO-C=CH \\ \qquad\qquad\qquad\;\, | \quad | \\ \qquad\qquad\qquad\; R^9 \; R^9 \end{array}$$

bzw.

hat, worin stehen

$R^9$ für (I) Wasserstoff, (II) eine 1 bis 12, insbesondere 1 bis 9 Kohlenstoffatome aufweisende Alkylgruppe, (III) eine insgesamt 7 bis 14, insbesondere 7 bis 20 Kohlenstoffatome aufweisende Phenylalkylgruppe, wobei 1 Wasserstoffatom des Phenylrests durch eine Alkylgruppe substituiert sein kann, (IV) eine Phenylgruppe oder (V) eine insgesamt 7 bis 14, insbesondere 7 bis 10 Kohlenstoffatome aufweisende Alkylphenylgruppe,

$R^{9'}$ fur (I) eine 1 bis 8, insbesondere 1 bis 4 Kohlenstoffatome aufweisende Alkylgruppe, (II) eine Phenylgruppe oder (III) eine insgesamt 7 bis 14, insbesondere 7 bis 10 Kohlenstoffatome aufweisende Phenylalkylgruppe,

in einer solchen Menge, daß sich ein Molverhältnis Titan aus der Titan enthaltenden Verbindung (a) : Sauerstoff enthaltende Verbindung (d) von 1 : 0,1 bis 1 : 2, insbesondere 1 : 0,08 bis 1 : 0,5 ergibt, anschließend wird.

(I) die gemäß (H) erhaltene Suspension unter heftiger Bewegung über eine Zeitspanne von 5 bis 120, insbesondere 15 bis 60 Minuten auf einer Temperatur von + 40 bis + 140, insbesondere + 50 bis + 95 °C gehalten, dann auf eine Temperatur von + 15 bis + 25 °C gebracht, hierauf wird

(J) — gegebenenfalls — aus der gemäß (I) erhaltenen Suspension der Feststoff abgetrennt, gewünschtenfalls mit einem unter Normalbedingungen flüssigen und unterhalb von 150, insbesondere unterhalb von 100 °C siedenden Kohlenwasserstoff gewaschen sowie getrocknet ;

und derart eine gemäß (I) erhaltene, in suspendierter Form oder gemäß (J) erhaltene, in isolierter Form als Feststoff vorliegende Titan-III-Komponente (1) gewonnen.

Zu dem erfindungsgemäßen Verfahren ist im einzelnen das folgende zu bemerken :

Das Polymerisationsverfahren als solches kann — unter Beachtung der kennzeichnenden Besonderheit — in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren, oder Trockenphasen-Polymerisationsverfahren. Die erwähnten technologischen Ausgestaltungen — mit anderen Worten : die technologischen Varianten der Polymerisation von -Monoolefinen nach Ziegler-Natta — sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z. B.

mittels Reglern, wie insbesondere Wasserstoff.

Des weiteren ist noch festzuhalten, daß beim erfindungsgemäßen Verfahren die Komponenten des Katalysatorsystems in mannigfacher Weise in den Polymerisationsraum eingebracht werden können, z. B. (i) die Titan-Komponente (1), die Aluminiumalkyl-Komponente (2) sowie — gegebenenfalls — der phenolische Stoff (3) alle örtlich gemeinsam, (ii) die gleichen Komponenten alle örtlich getrennt voneinander, (iii) die Komponente (1) einerseits und ein Gemisch aus den Komponenten (2) und (3) andererseits örtlich getrennt voneinander — was insbesondere beim Trockenphasen-Polymerisationsverfahren von Vorteil sein kann —, oder (iiii) ein Gemisch aus den Komponenten (1) und (3) einerseits und die Komponente (2) andererseits örtlich getrennt voneinander.

Schließlich ist darauf hinzuweisen, daß die vorteilhaften Eigenschaften des erfindungsgemäßen Verfahrens im allgemeinen besonders dann in Erscheinung treten, wenn es als Trockenphasen-Polymerisationsverfahren durchgeführt wird (für dessen Ausgestaltungen typische Beispiele etwa mit den DE-B 12 17 071, 15 20 307 und 15 20 373 gegeben sind).

Was die stoffliche Seite des neuen Katalysatorsystems betrifft, ist im einzelnen das folgende zu sagen :

(1) Zur Titan-III-Komponente

Die als ein Ausgangsstoff für diese Komponente dienenden Titan enthaltenden Verbindungen (a) mit der angegebenen Formel sind die einschlägig üblichen, z. B. solche, wie sie durch Kokristallisation von $TiCl_3$ und $AlCl_3$ oder Reduktion von $TiCl_4$ mittels Aluminium bzw. Gemischen aus Aluminium und Titan erhalten werden können. Besonders gut geeignet sind Kokristallisate der Formel $TiCl_3 \cdot 1/3AlCl_3$. Die in Betracht kommenden Titan enthaltenden Verbindungen (a) sind im Handel erhältlich, so daß sich nähere Ausführungen erübrigen.

Auch als Phosphor enthaltende Verbindungen (b) mit der angegebenen Formel kommen die einschlägig üblichen, dieser Formel gehorchenden in Betracht, insbesondere solche, in deren Formel stehen

$R^1$ für $R^2$ oder $NR_2^2$ und

$R^2$ für einen $C_1$- bis $C_8$-Alkylrest, vor allem einen $C_1$- bis $C_4$-Alkylrest oder einen Phenylrest.

Geeignete Verbindungen dieser Art sind beispielsweise beschrieben in der US-Patentschrift 3 186 977.

Namentliche Beispiele für gut geeignete Phosphor enthaltende Verbindungen sind Triphenylphosphin, Triphenylphosphinoxid, Tri-n-butylphosphin, Tri-n-butylphosphinoxid und Hexamethylphosphorsäuretriamid. Besonders gut geeignet sind Triphenylphosphinoxid und Tri-n-butylphosphin.

Der gleichfalls zu verwendende flüssige Kohlenwasserstoff (c) kann ein Kohlenwasserstoff der Art sein, die üblicherweise mit Titan enthaltenden Komponenten für Katalysatoren des Ziegler-Natta-Typs ohne Schaden für den Katalysator bzw. dessen Titan enthaltende Komponente zusammengebracht werden ; — z. B. bei der Polymerisation von α-Monoolefinen. Als Beispiele für geeignete Kohlenwasserstoffe seien genannt : Pentane, Hexane, Heptane, Benzine und Cyclohexan.

Die weiterhin zum Herstellen der Titan-III-Komponente dienende Sauerstoff enthaltende Verbindung (d) kann ein Äther ($d_1$) mit der angegebenen Formel oder — vorzugsweise — ein Ester ($d_2$) mit der angegebenen Formel sein.

Als Äther ($d_1$) kommen dabei wiederum die einschlägig üblichen, der angegebenen Formel gehorchenden in Betracht, insbesondere solche, in deren Formel $R^8$ bzw. $R^{8'}$ stehen für eine Methyl-, Äthyl-, Propyl-, Butyl-, Amyl-, Hexyl-, Benzyl- oder Phenylgruppe. Geeignete Verbindungen dieser Art sind beispielsweise beschrieben in der US-Patentschrift 3 116 274.

Namentliche Beispiele für gut geeignete Äther ($d_1$) sind der Di-n-propyl-, Di-n-butyl-, Di-iso-pentyl-, Di-n-amyl-, Di-n-hexyl- und Dibenzyläther, sowie vor allem der Di-n-Butyläther.

Als Ester ($d_2$) kommen ebenfalls die einschlägig üblichen, der angegebenen Formel gehorchenden in Betracht, insbesondere solche, in deren Formel stehen $R^9$ für Wasserstoff oder ein Methyl-, Äthyl-, n-Propyl-, n-Butyl-, n-Pentyl-, i-Pentyl-, n-Hexyl-, n-Heptyl-, n-Octyl-, n-Nonyl-, n-Decyl-, n-Undecyl-, n-Dodecyl-, Phenyl-, Benzyl-, 1-Phenyläthyl-, 2-Phenyläthyl-, 3-Phenylpropyl-, 4-Phenylbutyl- oder 5-Phenylpentyl-Gruppe, $R^{9'}$ für eine Methyl-, Äthyl-, Propyl-, n-Butyl-, n-Pentyl-, i-Pentyl-, n-Hexyl- oder Benzyl-Gruppe.

Namentliche Beispiele für gut geeignete Ester ($d_2$) sind Capronsäureäthylester, Pelargonsäureäthylester, sowie Laurinsäureäthylester.

(2) Zur Aluminiumalkyl-Komponente

Als Aluminiumalkyl-Komponente mit der angegebenen Formel kommen wiederum die einschlägig üblichen, dieser Formel gehorchenden in Betracht ; sie sind aus Literatur und Praxis so wohlbekannt, daß auf sie nicht näher eingegangen zu werden braucht. Als herausragender Vertreter sei beispielsweise genannt das Diäthylaluminiumchlorid.

(3) Zu den — gegebenenfalls mitzuverwendenden — phenolischen Stoffen.

Typische Beispiele für gut geeignete Stoffe mit der angegebenen Formel (I) sind solche, in denen der Rest $R^5$ eine tert.-Butylgruppe, der Rest $R^6$ Wasserstoff oder eine tert.-Butylgruppe, der Rest $R^7$ Wasserstoff oder eine niedere Alkylgruppe, wie die Methyl-, Äthyl-, n-Propyl-, i-Propyl-, n-Butyl-, i-Butyl- oder tert.-Butylgruppe sind o = 1 ist. Hervorzuheben sind auch Stoffe, in denen die Reste $R^5$ und $R^6$ die gleichen Reste wie vorstehend sind und deren Rest $R^7$ sich symbolisieren läßt durch die Formeln

$$-C_pH_{2p}-\underset{\displaystyle O}{\overset{\|}{C}}-O-C_qH_{2q+1} \qquad \text{(mit O = 1)}$$

oder

$$(-C_pH_{2p}-\underset{\displaystyle O}{\overset{\|}{C}}-O-CH_2-)_4C \qquad \text{(mit O = 4)}$$

worin stehen

p für eine ganze Zahl von 0 bis 5, insbesondere 1 bis 4, und

q für eine ganze Zahl von 1 bis 24, insbesondere 1 bis 18,

und wobei die Gruppierungen $—C_pH_{2p}—$ sowie $—C_qH_{2q+1}$ vorzugsweise geradkettig sind.

Namentliche Beispiele für gut geeignete Stoffe mit der angegebenen Formel (I) sind 1-Oxy-2,6-di-tert.-butylbenzol, 4-Oxy-3,5-di-tert.-butyltoluol, der Ester der β-(4'-Oxy-3',5'-di-tert.-butylphenyl)-propionsäure mit Methanol, Äthanol, n-Propanol, n-Butanol, n-Octanol, n-Dodecanol bzw. n-Octadecanol und der Tetra-ester der vorgenannten Säure mit Pentaerythrit sowie ferner 1,3,5-Trimethyl-2,4,6-tris-(3,5-di-tert.-butyl-4-hydroxy-benzyl)-benzol.

Typische Beispiele für gut geeignete Stoffe mit der angegebenen Formel (II) sind solche, die sich ableiten im Säureteil von der 2-Oxy-4-naphthoe-, 1-Oxy-2-naphthoe-, 2-Oxy-1-naphthoe- oder 1-Oxy-8-naphthoesäure und im Alkoholteil vom n-Octanol, n-Dodecanol oder n-Octadecanol.

Namentliche Beispiele für gut geeignete Stoffe mit der angegebenen Formel (II) sind der 2-Oxy-4-naphthoesäure-n-octadecylester, 1-Oxy-8-naphthoesäure-n-dodecylester, 1-Oxy-8-naphthoesäure-n-octadecylester, 1-Oxy-2-naphthoesäure-n-octylester und der 2-Oxy-1-naphthoesäure-n-octadecylester.

Das Herstellen der neuen Titan-III-Komponente ist einfach und für den Fachmann ohne nähere Erläuterungen möglich. Zu erwähnen ist lediglich das Folgende :

Die Maßnahme gemäß (E) sollte zweckmäßigerweise dann durchgeführt werden, wenn eine besonders enge Korngrößenverteilung gewünscht wird.

Das Durchführen der Maßnahme gemäß (F) bringt im allgemeinen den Effekt, daß — bei etwas verminderter Produktivität des Katalysatorsystems — ein ausgeprägt grobkörniges Polymerisat erhalten wird.

Die Maßnahme gemäß (G) wiederum sollte dann getroffen werden, wenn aus Stufe (F) ein agglomeriertes Produkt anfällt.

Beim Durchführen der Maßnahme gemäß (H), d. h. beim Herstellen der entsprechenden Suspension, hat sich gezeigt, daß es oft günstig ist, wenn man den Feststoff zunächst zusammenbringt mit einer relativ kleinen Menge des Kohlenwasserstoffs und dann die Gesamtmenge der Sauerstoff enthaltenden Verbindung mit der Restmenge des Kohlenwasserstoffs zufügt.

Im Zuge der Durchführung der Maßnahme gemäß (I) ist die Suspension heftig zu bewegen, — was am einfachsten durch Rühren erfolgen kann.

Das erfindungsgemäße Verfahren erlaubt es, Homo- und Copolymerisate von $C_2$- bis $C_6$-α-Monoolefinen in vorteilhafter Weise herzustellen, wobei besonders geeignete zu polymerisierende α-Monoolefine Propylen, Buten-1 und 4-Methylpenten-1, sowie — zur Copolymerisation — Äthylen sind.

## Beispiel 1

### Herstellung der Titan-III-Komponente (1)

Es wird so verfahren, daß man eine Titan enthaltende Verbindung (a) der Formel $TiCl_3 \cdot 0{,}33\ AlCl_3$ und als Phosphor enthaltende Verbindung (b) Tri-n-butylphosphin einer Mahlbehandlung unterzieht, derart, daß man

(A) mit einer Kugelschwingmühle arbeitet, die eine Mahlbeschleunigung von 46 $m \cdot sec^{-2}$ hat,

(B) die Mühle zunächst mit der Titan enthaltenden Verbindung (a) beschickt und dann

(C) unter Mahlen bei einer Temperatur des Mahlgutes von – 15 °C die einem Molverhältnis Titan in der Titan enthaltenden Verbindung (a) : Phosphor enthaltende Verbindung (b) von 1 : 0,19 entsprechende Menge der Phosphor enthaltenden Verbindung (b) mit einer Geschwindigkeit von 1,5 ml/Min pro 2,5 kg Titan enthaltende Verbindung (a) kontinuierlich und in Abwesenheit von Verdünnungsmitteln zugibt, daraufhin

(D) unter Mahlen das Mahlgut über eine Zeitspanne von 24 Stunden auf einer Temperatur von + 70 °C hält, und hierauf

(E) das gemäß (D) erhaltene Produkt über eine Zeitspanne von 20 Minuten bei einer Temperatur von – 20 °C in Abwesenheit von Verdünnungsmitteln weitervermahlt, und

(F) das gemäß (E) erhaltene Produkt ohne es zu mahlen über eine Zeitspanne von 24 Std. auf einer

Temperatur von + 70 °C hält.

(G) — Entfällt —

Erfindungsgemäß verfährt man im Weiteren so, daß man zusätzlich

(H) eine Suspension herstellt aus

($H_1$) 1 Gew.-Teil des gemäß (F) erhaltenen Produkts,

($H_2$) 1,1 Gew.-Teilen n-Heptan als Kohlenwasserstoff (c), sowie

($H_3$) dem Di-n-Butyläther als Sauerstoff enthaltende Verbindung (d) in einer solchen Menge, daß sich ein Molverhältnis Titan aus der Titan enthaltenden Verbindung (a) : Sauerstoff enthaltende Verbindung (d) von 1 : 0,13 ergibt, anschließend

(I) die gemäß (H) erhaltene Suspension unter heftigem Rühren über eine Zeitspanne von 30 Minuten auf einer Temperatur von + 70 °C hält, dann auf eine Temperatur von + 25 °C bringt, hierauf

(J) aus der gemäß (I) erhaltenen Suspension den Feststoff abtrennt, mit n-Heptan wäscht sowie trocknet;

und derart mit dem gemäß (J) erhaltenen, in isolierter Form vorliegenden Feststoff die Titan-III-Komponente (1) gewinnt.

Polymerisation mittels der Titan-III-Komponente (1)

1,0 g der Titan-III-Komponente (1) sowie 1,4 g Diäthylaluminiumchlorid (2) — was einem Atomverhältnis Titan aus der Titan-III-Komponente (1) : Aluminium aus dem Diäthylaluminiumchlorid (2) von etwa 1 : 3 entspricht — werden in einen 2-1-Rührkolben gegeben, der mit 1,5 l trockenem Heptan beschickt ist. Sodann wird unter Rühren und bei den — jeweils durch Regelung konstant gehaltenen — Parametern: Propylendruck = 1 bar, Temperatur = 60 °C, über eine Zeitspanne von 5 Stunden polymerisiert, wonach die Polymerisation durch Zugabe von 20 ml Methanol abgebrochen wird. Hierauf wird das Suspensionsmedium durch Destillation abgetrennt.

Daten zu dem dabei erhaltenen Polypropylen finden sich in der unten stehenden Tabelle.

Beispiel 2

Herstellung der Titan-III-Komponente (1)

Es wird so verfahren, daß man eine Titan enthaltende Verbindung (a) der Formel $TiCl_3 \cdot 0,33\ AlCl_3$ und als Phosphor enthaltende Verbindung (b) Tri-n-butylphosphin einer Mahlbehandlung unterzieht, derart, daß man

(A) mit einer Kugelschwingmühle arbeitet, die eine Mahlbeschleunigung von 48 $m \cdot sec^{-2}$ hat,

(B) die Mühle zunächst mit der Titan enthaltenden Verbindung (a) beschickt und dann

(C) unter Mahlen bei einer Temperatur des Mahlgutes von − 16 °C die einem Molverhältnis Titan in der Titan enthaltenden Verbindung (a): Phosphor enthaltende Verbindung (b) von 1 : 0,19 entsprechende Menge der Phosphor enthaltenden Verbindung (b) mit einer Geschwindigkeit von 1,5 ml/Min pro 2,5 kg Titan enthaltende Verbindung (a) kontinuierlich und in Abwesenheit von Verdünnungsmitteln zugibt, daraufhin

(D) unter Mahlen das Mahlgut über eine Zeitspanne von 30 Stunden auf einer Temperatur von + 65 °C hält, hierauf

(E) das gemäß (D) erhaltene Produkt über eine Zeitspanne von 15 Minuten bei einer Temperatur von − 25 °C in Abwesenheit von Verdünnungsmitteln weitervermahlt, und

(F) das gemäß (E) erhaltene Produkt ohne es zu mahlen über eine Zeitspanne von 26 Stunden auf einer Temperatur von + 70 °C hält und dann etwas auflockert.

(G) — Entfällt —

Erfindungsgemäß verfährt man im Weiteren so, daß man zusätzlich

(H) eine Suspension herstellt aus

($H_1$) 1 Gew.-Teil des gemäß (F) erhaltenen Produkts,

($H_2$) 1,0 Gew.-Teilen n-Heptan als Kohlenwasserstoff (c), sowie

($H_3$) dem Capronsäureäthylester als Sauerstoff enthaltender Verbindung (d) in einer solchen Menge, daß sich ein Molverhältnis Titan aus der Titan enthaltenden Verbindung (a) : Sauerstoff enthaltende Verbindung (d) von 1 : 0,14 ergibt, anschließend

(I) die gemäß H erhaltene Suspension unter heftigem Rühren über eine Zeitspanne von 30 Minuten auf einer Temperatur von + 75 °C hält, dann auf eine Temperatur von + 20 °C bringt, hierauf

(J) aus der gemäß (I) erhaltenen Suspension den Feststoff abtrennt, mit n-Heptan wäscht sowie trocknet;

und derart mit dem gemäß (J) erhaltenen, in isolierter Form vorliegenden Feststoff wie Titan-III-Komponente (1) gewinnt.

Polymerisation mittels der Titan-III-Komponente (1)

Sie erfolgt wie in Beispiel 1, zu den Daten des nunmehr erhaltenen Polypropylens siehe ebenfalls die nachstehende Tabelle.

Beispiel 3

Herstellung der Titan-III-Komponente (1)

Sie erfolgt in gleicher Weise wie in Beispiel 2.

Polymerisation mittels der Titan-III-Komponente (1)

Es wird in Analogie zu Beispiel 1 gearbeitet mit 1,0 g der Titan-III-Komponente (1) und einer solchen Menge Diäthylaluminiumchlorid (2), daß das Atomverhältnis Titan aus der Titan-III-Komponente (1) : Aluminium aus dem Diäthylaluminiumchlorid (2) 1 : 3 beträgt, sowie einer solchen Menge n-Octadecyl-β-(4'oxy-3',5'-di-tert.-butylphenyl) -propionat (3), daß das Molverhältnis Diäthylaluminiumchlorid (2) : phenolischem Stoff (3) 20 : 1 beträgt.

Auch die Daten des hierbei erhaltenen Polypropylens sind in der Tabelle angegeben.

In der Tabelle bedeuten :

Spez. Ausb. = Gewichtsteile an Polymerisat, die pro Gewichtsteil der Titan-III-Komponente — gerechnet als Titan — erhalten werden.

< xyz ; % = Prozentualer Anteil des Polymerisats mit einem Teilchendurchmesser von unter xyz µm.

./. = nicht ermittelt

| Beispiel | Spez.Ausb. | <100;% | <250;% | <500;% |
|---|---|---|---|---|
| 1 | 675 | 3,1 | 8,4 | 21 |
| 2 | 480 | 0,0 | 0,9 | 7,5 |
| 3 | 300 | 0,2 | 3,0 | ./. |

**Anspruch**

Verfahren zum Herstellen von Homo- und Copolymerisaten von $C_2$- bis $C_6$-α-Monoolefinen bei Temperaturen von 20 bis 160 °C und Drücken von 1 bis 100 bar mittels eines Ziegler-Natta-Katalysatorsystems aus

(1) einer Titan-III-Komponente, bei deren Herstellung man

(1.1) eine Titan enthaltende Verbindung (a) der Formel

$$TiCl_3 \cdot nAlCl_3,$$

worin n für eine Zahl im Bereich von 0,01 bis 1 steht, und

(1.2) eine Phosphor enthaltende Verbindung (b) der Formel

$$O_mPR_3^1,$$

worin stehen

m für 0 oder 1,

$R^1$ für $R^2$, $OR^2$ oder $NR_2^2$ und

$R^2$ für einen nicht mehr als 24 Kohlenstoffatome aufweisenden Alkyl-, Aryl-, Alkaryl- oder Aralkylrest,

einer Mahlbehandlung unterzieht, derart, daß man

(A) mit einer Kugelschwingmühle arbeitet, die eine Mahlbeschleunigung von 30 bis 80 m · $sec^{-2}$ hat,

(B) die Mühle zunächst mit der Titan enthaltenden Verbindung (a) beschickt und — gegebenenfalls — bei einer Temperatur von − 50 bis + 100 °C über eine Zeitspanne von 0,5 bis 100 Stunden in Abwesenheit von Verdünnungsmitteln betreibt, dann

(C) unter Mahlen bei einer Temperatur des Mahlgutes von − 50 bis + 80 °C die einem Molverhältnis Titan in der Titan enthaltenden Verbindung (a) : Phosphor enthaltende Verbindung (b) von 1 : 0,01 bis 1 : 1 entsprechende Menge der Phosphor enthaltenden Verbindung (b) mit einer Geschwindigkeit von 0,01 bis 200 ml/Min pro 2,5 kg Titan enthaltende Verbindung (a) kontinuierlich oder in kleinen Portionen und in Abwesenheit von Verdünnungsmitteln zugibt, daraufhin

(D) unter Mahlen das Mahlgut über eine Zeitspanne von 1 bis 100 Stunden auf einer Temperatur von + 15 bis + 120 °C hält, hierauf

(E) — gegebenenfalls — das gemäß (D) erhaltene Produkt über eine Zeitspanne von 0,5 bis 60 Minuten bei einer Temperatur von − 50 bis + 5 °C in Abwesenheit von Verdünnungsmitteln weitervermahlt, sodann

(F) — gegebenenfalls und vorteilhafterweise — das gemäß (D) oder (E) erhaltene Produkt ohne es zu mahlen über eine Zeitspanne von 0,25 bis 300 Stunden auf einer Temperatur von + 20 bis + 150 °C hält, und danach

(G) — gegebenenfalls — das gemäß (F) erhaltene Produkt über eine Zeitspanne von 0,5 bis 60 Minuten bei einer Temperatur von – 50 bis + 5 °C in Abwesenheit von Verdünnungsmitteln nachvermahlt,

(2) einer Aluminiumalkyl-Komponente der Formel

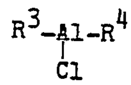

worin $R^3$ und $R^4$ gleich oder verschieden sind und stehen für eine 1 bis 8 Kohlenstoffatome aufweisende Alkylgruppe, sowie

(3) — gegebenenfalls — einem phenolischen Stoff der Formel

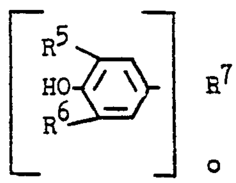 oder (I)

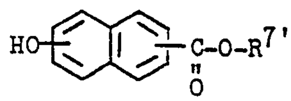 (II)

worin stehen

$R^5$ für eine $C_1$- bis $C_6$-Alkylgruppe,

$R^6$ für Wasserstoff oder eine $C_1$- bis $C_6$-Alkylgruppe,

$R^7$ für Wasserstoff oder einen nicht mehr als 30 Kohlenstoffatome sowie — gegebenenfalls — bis zu insgesamt 6 Äthergruppen und/oder Estergruppen aufweisenden gesättigten Kohlenwasserstoffrest,

$R^{7'}$ für eine $C_2$- bis $C_{24}$-Alkylgruppe, und

o für eine ganze Zahl von 1 bis 6,

mit den Maßgaben, daß das Atomverhältnis Titan aus der Titan-III-Komponente (1) : Aluminium aus der Aluminiumalkyl-Komponente (2) im Bereich von 1 : 1 bis 1 : 20 liegt, und daß — im gegebenen Fall — das Molverhältnis Aluminiumalkyl-Komponente (2) : phenolischer Stoff (3) 1 : 1 bis 40 : 1 beträgt, dadurch gekennzeichnet, daß eine Titan-III-Komponente (1) eingesetzt wird, zu deren Herstellung man zusätzlich

(H) eine Suspension herstellt aus

($H_1$) 1 Gew.-Teil des gemäß (D), (E), (F) oder (G) erhaltenen Produkts,

($H_2$) 0,5 bis 20 Gew.-Teilen eines unter Normalbedingungen flüssigen und unterhalb von 150 °C siedenden Kohlenwasserstoffs (c), sowie

($H_3$) einer Sauerstoff enthaltenden Verbindung (d), bestehend aus

($d_1$) einem Äther, der insgesamt 4 bis 30 Kohlenstoffatome enthält und die Formel

$$R^8—O—R^{8'}$$

hat, worin $R^8$ und $R^{8'}$ gleich oder verschieden sind und stehen für (I) eine 1 bis 15 Kohlenstoffatome aufweisende Alkylgruppe, (II) eine Phenylgruppe oder (III) eine insgesamt 7 bis 14 Kohlenstoffatome aufweisende Alkylphenylgruppe, und/oder

($d_2$) einem Ester, der insgesamt 2 bis 34 Kohlenstoffatome enthält und die Formel

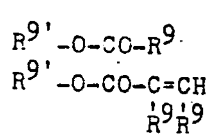 bzw.

hat, worin stehen

$R^9$ für (I) Wasserstoff, (II) eine 1 bis 12 Kohlenstoffatome aufweisende Alkylgruppe, (III) ene

insgesamt 7 bis 14 Kohlenstoffatome aufweisende Phenylalkylgruppe, wobei 1 Wasserstoffatom des Phenylrests durch eine Alkylgruppe substituiert sein kann, (IV) eine Phenylgruppe oder (V) eine insgesamt 7 bis 14 Kohlenstoffatome aufweisende Alkylphenylgruppe,

$R^{9'}$ für (I) eine 1 bis 8 Kohlenstoffatome aufweisende Alkylgruppe, (II) eine Phenylgruppe oder (III) eine insgesamt 7 bis 14 Kohlenstoffatome aufweisende Phenylalkylgruppe,

in einer solchen Menge, daß sich ein Molverhältnis Titan aus der Titan enthaltenden Verbindung (a) : Sauerstoff enthaltende Verbindung (d) von 1 : 0,01 bis 1 : 2 ergibt, anschließend wird

(I) die gemäß (H) erhaltene Suspension unter heftiger Bewegung über eine Zeitspanne von 5 bis 120 Minuten auf einer Temperatur von + 40 bis + 140 °C, gehalten, dann auf eine Temperatur von + 15 bis + 25 °C gebracht, hierauf wird

(J) — gegebenenfalls — aus der gemäß (I) erhaltenen Suspension der Feststoff abgetrennt, gewünschtenfalls mit einem unter Normalbedingungen flüssigen und unterhalb von 150 °C siedenden Kohlenwasserstoff gewaschen, sowie getrocknet ; und derart eine gemäß (I) erhaltene, in suspendierter Form oder gemäß (J) erhaltene, in isolierter Form als Feststoff vorliegende Titan-III-Komponente (1) gewonnen.

**Claim**

A process for the preparation of homopolymers and copolymers of $C_2$-$C_6$-$\alpha$-monoolefins at from 20 to 160 °C and under a pressure of from 1 to 100 bar, by means of a Ziegler-Natta catalyst system comprising

(1) a titanium-III component, in the preparation of which

(1.1) a titanium-containing compound (a) of the formula

$$TiCl_3 \cdot nAlCl_3$$

where n is a number from 0.01 to 1, and

(1.2) a phosphorus-containing compound (b) of the formula

$$O_mPR_3^1$$

where

m is 0 or 1,

$R^1$ is $R^2$, $OR^2$ or $NR_2^2$ and

$R^2$ is alkyl, aryl, alkaryl or aralkyl, of not more than 24 carbon atoms, are subjected to a milling treatment wherein

(A) a vibratory ball mill which has a milling acceleration of from 30 to 80 m · $sec^{-2}$ is employed,

(B) the mill is first charged with the titanium-containing compound (a) and — if desired — is operated at from − 50 to + 100 °C for a period of from 0.5 to 100 hours in the absence of a diluent, then

(C) whilst milling the charge at from − 50 to + 80 °C, the amount of the phosphorus-containing compound (b) which corresponds to a molar ratio of titanium in the titanium-containing compound (a) to phosphorus-containing compound (b) of from 1 : 0.01 to 1 : 1 is added continuously or in small portions at a rate of from 0.01 to 200 ml/min per 2.5 kg of titanium-containing compound (a), in the absence of a diluent, thereupon

(D) the charge is kept at from + 15 to + 120 °C for a period of from 1 to 100 hours, whilst being milled, hereupon

(E) — if desired — the product obtained from (D) is milled further for a period of from 0.5 to 60 minutes, at from − 50 to + 5 °C, in the absence of a diluent, then

(F) — if desired, and advantageously — the product obtained from (D) or (E) is kept at from + 20 to + 150 °C for a period of from 0.25 to 300 hours, without being milled, and thereafter

(G) — if desired — the product obtained according to (F) is milled further for a period of from 0.5 to 60 minutes at from − 50 to + 5 °C in the absence of a diluent,

(2) an aluminium-alkyl component of the formula

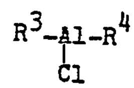

where $R^3$ and $R^4$ are identical or different and each is alkyl of 1 to 8 carbon atoms, and

(3) — if desired — a phenolic compound of the formula

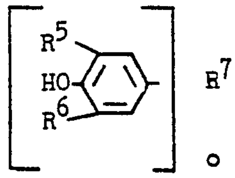 or (I)

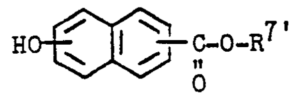 (II)

where

$R^5$ is $C_1$-$C_6$-alkyl,

$R^6$ is hydrogen or $C_1$-$C_6$-alkyl,

$R^7$ is hydrogen or a saturated hydrocarbon radical of not more than 30 carbon atoms, which may or may not contain up to a total of 6 ether groups and/or ester groups,

$R^{7'}$ is $C_2$-$C_{24}$-alkyl, and

o is an integer from 1 to 6,

with the proviso that the atomic ratio of titanium from the titanium-III component (1) to aluminium from the aluminium-alkyl component (2) is from 1 : 1 to 1 : 20 and that, where relevant, the molar ratio of aluminium-alkyl component (2) to phenolic compound (3) is from 1 : 1 to 40 : 1, in which process a titanium-III component (1) is employed, in the preparation of which, additionally,

(H) a suspension is prepared from

($H_1$) 1 part by weight of the product obtained from (D), (E), (F) or (G),

($H_2$) from 0.5 to 20 parts by weight of a hydrocarbon (c) which is liquid at standard temperature and pressure and boils below 150 °C, and

($H_3$) an oxygen-containing compound (d) consisting of

($d_1$) an ether which has a total of 4 to 30 carbon atoms, and has the formula

$$R^8—O—R^{8'}$$

where $R^8$ and $R^{8'}$ are identical or different and are (I) alkyl of 1 to 15 carbon atoms, (II) phenyl or (III) alkylphenyl of a total of 7 to 14 carbon atoms, and/or

($d_2$) an ester which has a total of 2 to 34 carbon atoms and has the formula

$$R^{9'}-O-CO-R^9$$ or

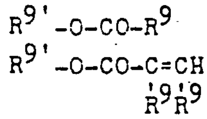

where

$R^9$ is (I) hydrogen, (II) alkyl of 1 to 12 carbon atoms, (III) phenylalkyl of a total of 7 to 14 carbon atoms, in which 1 hydrogen atom of the phenyl radical can be replaced by alkyl, (IV) phenyl or (V) alkylphenyl of a total of 7 to 14 carbon atoms, and

$R^{9'}$ is (I) alkyl of 1 to 8 carbon atoms, (II) phenyl or (III) phenylalkyl of a total of 7 to 14 carbon atoms, in such amount that the molar ratio of titanium from the titanium-containing compound (a) to oxygen-containing compound (d) is from 1 : 0.01 to 1 : 2, thereafter

(I) the suspension obtained from (H) is kept at from + 40 to + 140 °C for from 5 to 120 minutes, with vigorous agitation, and is then brought to from + 15 to + 25 °C, and hereupon

(J) — if desired — the solid is isolated from the suspension obtained according to (I), if desired, washed with a hydrocarbon which is liquid at standard temperature and pressure and boils below 150 °C, and dried, the solid thus obtained in suspended form from (I) or in isolated form from (J) constituting the titanium-III component (1).

**Revendication**

Procédé de préparation d'homopolymères et de copolymères d'α-monooléfines en $C_2$ à $C_6$, à des températures de 20 à 160 °C et sous des pressions de 1 à 100 bars, à l'aide d'un système catalytique de Ziegler-Natta constitué de

(1) une composante à titane-III, au cours de la préparation de laquelle on soumet

(1.1) un composé contenant du titane (a) de la formule

$$TiCl_3 \cdot nAlCl_3,$$

dans laquelle n représente un nombre dont la valeur fluctue de 0,01 à 1, et

(1.2) un composé contenant du phosphore (b) de la formule

$$O_mPR_3^1,$$

dans laquelle

m est égal à 0 ou à 1,

$R^1$ représente $R^2$, $OR^2$ ou $NR_2^2$ où

$R^2$ représente un radical aralcoyle, alcaryle, aryle ou alcoyle ne comportant pas plus de 24 atomes de carbone,

à un traitement de broyage mis en œuvre de façon à ce que

(A) on travaille avec un broyeur à boulets à cuve vibrante, doté d'une accélération de broyage de 30 à 80 m $\cdot$ $s^{-2}$,

(B) on garnit d'abord le broyeur du composé contenant le titane (a) et on le fait fonctionner — éventuellement — à une température de − 50 à + 100 °C pendant une période qui varie de 0,5 à 100 heures en l'absence de diluants, puis

(C) cependant que se poursuit le broyage à une température du produit en cours de broyage de − 50 à + 80 °C, on ajoute continuellement ou par petites fractions et en l'absence de diluants, le composé contenant du phosphore (b) en une quantité correspondant à un rapport molaire du titane présent dans le composé contenant le titane (a) au composé contenant du phosphore (b) de 1 : 0,01 à 1 : 1, avec un débit de 0,01 à 200 ml/mn par 2,5 kg de composé contenant du titane (a), ensuite

(D) cependant que se poursuit le broyage, on maintient le produit soumis au broyage à une température de + 15 à + 120 °C, pendant une période qui varie de 1 à 100 heures, puis

(E) — éventuellement — on poursuit le broyage du produit obtenu à l'étape (D), à une température de − 50 à + 5 °C, pendant une période qui varie de 0,5 à 60 minutes, en l'absence de diluants, ensuite

(F) — éventuellement et avantageusement — on maintient le produit obtenu à l'étape (D) ou à l'étape (E), sans le broyer, à une température de + 20 à + 150 °C, pendant une période qui varie de 0,25 à 300 heures et finalement

(G) — éventuellement — on poursuit le broyage du produit obtenu à l'étape (F) à une température de − 50 à + 5 °C pendant une période qui fluctue de 0,5 à 60 minutes, en l'absence de diluants,

(2) une composante d'alcoylaluminium de la formule

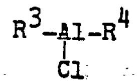

dans laquelle $R^3$ et $R^4$ sont identiques ou différents et représentent un radical alcoyle possédant de 1 à 8 atomes de carbone, et

(3) — éventuellement — une substance phénolique de la formule

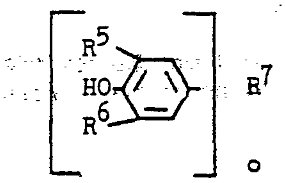 ou (I)

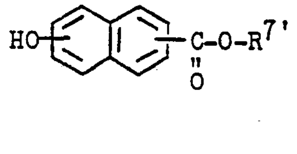 (II)

dans laquelle

$R^5$ représente un radical alcoyle en $C_1$ à $C_6$,

$R^6$ représente un atome d'hydrogène ou un radical alcoyle en $C_1$ à $C_6$,

$R^7$ représente un atome d'hydrogène ou un radical hydrocarboné saturé, ne comportant pas plus de 30 atomes de carbone et — éventuellement — jusqu'à au total 6 groupes éther et/ou groupes ester,

$R^{7'}$ représente un groupe alcoyle en $C_2$ à $C_{24}$, et

o représente un nombre entier dont la valeur fluctue de 1 à 6,

avec les conditions que le rapport atomique du titane de la composante au titane-III (1) à l'aluminium de la composante à l'alcoylaluminium (2) fluctue dans la plage de 1 : 1 à 1 : 20, et que — dans le cas donné — le rapport molaire de la composante à l'alcoylaluminium (2) à la substance phénolique (3) varie de 1 : 1 à

40 : 1, caractérisé en ce que l'on utilise une composante au titane-III (1) qui a été obtenue comme suit :

(H) on prépare une suspension à partir de

($H_1$) 1 partie en poids des produits obtenus suivant le stade (D), (E), (F) ou (G),

($H_2$) 0,5 à 20 parties en poids d'un hydrocarbure (c) liquide dans les conditions normales et bouillant en dessous de 150 °C, et

($H_3$) un composé (d) contenant de l'oxygène constitué

($d_1$) d'un éther qui contient au total de 4 à 30 atomes de carbone et qui répond à la formule :

$$R^8—O—R^{8'}$$

dans laquelle $R^8$ et $R^{8'}$ sont identiques ou différents et représentent (I) un groupe alcoyle possédant de 1 à 15 atomes de carbone, (II) un groupe phényle ou (III) un groupe alcoylphényle possédant au total de 7 à 14 atomes de carbone et/ou

($d_2$) un ester qui contient au total de 2 à 34 atomes de carbone et qui répond à la formule :

$$R^{9'}-O-CO-R^9 \quad \text{ou}$$

$$R^{9'}-O-CO-\underset{R^9}{\underset{|}{C}}=\underset{R^9}{\underset{|}{CH}}$$

dans laquelle

$R^9$ représente (I) un atome d'hydrogène, (II) un groupe alcoyle possédant de 1 à 12 atomes de carbone, (III) un groupe phénylalcoyle possédant au total de 7 à 14 atomes de carbone, où un atome d'hydrogène du radical phényle peut être substitué par un groupe alcoyle, (IV) un groupe phényle ou (V) un groupe alcoylphényle possédant au total de 7 à 14 atomes de carbone,

($R^{9'}$) représente (I) un groupe alcoyle possédant de 1 à 8 atomes de carbone, (II) un groupe phényle ou (III) un groupe phénylalcoyle possédant au total de 7 à 14 atomes de carbone,

en une quantité telle qu'il s'établisse un rapport molaire du titane provenant du composé contenant du titane (a) au composé contenant de l'oxygène (d) de 1 : 0,01 à 1 : 2, et

(I) on maintient la suspension obtenue suivant le stade (H), sous vigoureuse agitation et pendant une durée de 5 à 120 minutes à unte température de + 40 à + 140 °C, puis on la porte à une température de + 15 à + 25 °C, et

(J) — éventuellement — on sépare la matière solide de la suspension obtenue suivant le stade (I), si cela se révèle souhaitable, on lave cette matière solide avec un hydrocarbure liquide dans les conditions normales et bouillant en dessous de 150 °C et on la sèche, et on recueille de cette manière une composante au titane -III (1) obtenue selon le stade (I) sous forme de suspension ou obtenue selon le stade (J) sous forme isolée, comme matière solide.